# EUROPÄISCHE PATENTSCHRIFT

(11) **EP 0 346 826 B1**
(45) Veröffentlichungstag und Bekanntmachung des Hinweises auf die Patenterteilung: **09.03.1994**
(21) Anmeldenummer: 89110670.0
(22) Anmeldetag: 13.06.1989
(51) Int. Cl.: B29C 67/12

(54) **Verstärkungsmaterial für Duroplaste**
Reinforced material for a curable resin
Matière de renforcement pour résine durcissable

(30) Priorität: 16.06.1988 DE 3820511
(43) Veröffentlichungstag der Anmeldung: 20.12.1989
(73) Patentinhaber: Kölzer, Klaus Kurt, D-40593 Düsseldorf (DE)
(72) Erfinder: Kölzer, Klaus Kurt, D-40593 Düsseldorf (DE)
(74) Vertreter: Eggert, Hans-Gunther, Dr.

(56) Entgegenhaltungen:
- EP-A- 0 222 399
- EP-A- 0 276 890
- US-A- 4 879 163
- Derwent Publications Ltd, London, GB World Patents Index Latest AN 89-0666660,DW8909 & JP-A-1020348

## Beschreibung

Duroplaste werden im zunehmenden Maß als Faserverbundwerkstoffe verwendet, wobei sich diese Faserverbundwerkstoffe im Vergleich zu unverstärkten Kunststoffen insbesondere durch eine wesentlich höhere mechanische Belastbarkeit auszeichnen.

Hierbei weisen diese Faserverbundwerkstoffe eine textile Warenbahn auf, bei der es sich beispielsweise um ein Gewebe, Vlies, Gewirke oder Gelege insbesondere aus Polyester-, Polyamid-, Polypropylen-und/oder Glasfasern handeln kann. Die Warenbahn wird vor oder bei dem Verarbeiten mit einem Harz bzw. einer Harzmischung getränkt, wobei hier nur beispielhaft für ein derartiges Harz die bekannten klassischen Amino- und Phenoplaste, Epoxidharze, Polyesterharze und andere Reaktionsharze genannt werden. Das Aushärten wird dann durch einen dem flüssigen Kunststoffharz zugesetzten Katalysator bewirkt.

Bei den zuvor beschriebenen Faserverbundwerkstoffen fängt die Warenbahn bei einer mechanischen Belastung einen Großteil der angreifenden Kräfte auf, so daß die hohe mechanische Beanspruchbarkeit von derartigen Faserverbundwerkstoffen auf die darin eingebettete textile Warenbahn zurückzuführen ist. Dies wiederum führt dazu, daß mit zunehmendem Anteil an Warenbahn das spezifische Gewicht des Faserverbundwerkstoffes zunimmt, was insbesondere auch für solche Laminate zutrifft, die Warenbahnen aus Glasfasern aufweisen.

Um ohne Verringerung der mechanischen Festigkeit das spezifische Gewicht der Faserverbundwerkstoffe zu verkleinern, wurde bereits versucht, einen Teil des vorstehend genannten Harzes durch Leichtfüllstoffe zu ersetzen, die dem Harz zugesetzt werden. Hierbei wurden insbesondere sog. Hohlkörperfüllstoffe, auch Microspheres genannt, eingesetzt, die sowohl anorganischer als auch organischer Natur sein können. Diese Leichtfüllstoffe reduzieren aufgrund ihrer hohlen Struktur das spezifische Gewicht des Faserverbundwerkstoffes erheblich.

Das zuvor beschriebene Verfahren bereitet jedoch in der Anwendung Schwierigkeiten, da durch das Zumischen der Mikrohohlkörper zu dem Laminierharz die Viskosität des Harzes und sein Laminierverhalten nachteilig beeinflußt wird. Auch gelingt es nur sehr ungenügend, die Hohlkörperfüllstoffe über die Dicke des Laminats gleichmäßig zu verteilen, so daß vielfach eine unerwünschte Anreicherung in der Oberfläche des Faserverbundwerkstoffes auftritt.

Die EP-A-222 399 beschreibt ein Verstärkungsmaterial mit den Merkmalen des Oberbegriffs des Patentanspruchs 1.

Um ein derartiges Verstärkungsmaterial herzustellen, wird die Warenbahn durch ein Bad einer wässrigen Suspension geführt, das die unaufgeblähten Mikrohohlkörper enthält. Hierdurch werden die unaufgeblähten Mikrohohlkörper zwischen den aus Elementarfäden bestehenden Fadensystemen der Warenbahn eingelagert. Bei einer abschließenden thermischen Behandlung der Warenbahn expandieren die Mikrohohlkörper unter Vervielfachung ihres Volumens und Bildung einer entsprechend dicken Warenbahn.

Insbesondere bei Warenbahnen, die aus zwei miteinander verbundenen oder verkreuzten Fadensystemen bestehen, wobei eines dieser Fadensysteme überwiegend in Längsrichtung der Warenbahn und das andere Fadensystem überwiegend quer zur Warenbahn verläuft, kann die beschriebene Volumenvergrößerung während der Herstellung des Verstärkungsmaterials dazu führen, daß eine Verkürzung der Fadensysteme auftritt. Dies wiederum hat zur Folge, daß die quer und längs verlaufenden Fadensysteme über die Breite und Länge der Warenbahn gesehen unterschiedlich große Schrumpfkräfte und einen unterschiedlich großen Schrumpf entwickeln, was zu einem unerwünschten Boldern der Warenbahn sowie zu Lauffalten führt. Selbst wenn man bei der thermischen Behandlung ein Schrumpfen der querverlaufenden Fadensysteme der Warenbahn verhindert, was beispielsweise dadurch erreicht werden kann, daß man die Kanten der Warenbahn während der thermischen Behandlung, beispielsweise in einen Spannrahmen, führt, so läge zwar die Warenbahn nach dieser Behandlung ohne Boldern und Lauffalten vor. Hier besteht jedoch die Gefahr, daß beim späteren Tränken mit Harzen und Aushärten aufgrund der in den quer verlaufenden Fadensystemen eingefrorenen Spannungen ein sofortiges oder späteres Schrumpfen auftritt, so daß sich der fertig laminierte Faserverbundwerkstoff unerwünscht wellt oder verwirft.

Der vorliegenden Erfindung liegt die Aufgabe zugrunde, ein Verstärkungsmaterial für Duroplaste der angegebenen Art zur Verfügung zu stellen, das als eine Warenbahn eine bestimmte gewünschte Oberflächenstruktur erhält.

Diese Aufgabe wird dadurch gelöst, daß man für die Warenbahn eine bestimmte Konstruktion vorsieht, bei der das eine Fadensystem das andere Fadensystem teilweise oder vollständig abdeckt. Gleichzeitig wird sicherstellt, daß etwa 60 bis etwa 100 Vol.% der Mikrohohlkügelchen in dem abdeckenden Fadensystem angeordnet sind.

Das vorstehend beschriebene, erfindungsgemäß hergestellte Verstärkungsmaterial weist eine Reihe von Vorteilen auf. Bedingt durch den speziellen Aufbau der Warenbahn, bei der das eine Fadensystem das andere teilweise oder vollständig abdeckt, gelangen bei der Imprägnierung mit der wässrigen Suspension die nichtexpandierten Mikrohohlkörper nicht oder nur im verringerten Maße in das abgedeckte Fadensystem. Dies wiederum führt dazu, daß bei der sich hieran anschließenden thermischen Behandlung in Folge der Aufblähung der Mikrohohlkörper das abgedeckte Fadensystem nicht oder nur im untergeordneten Maße schrumpft, während das abdeckende Fadensystem, das den größeren Anteil an Mikrohohlkörpern aufweist, im Vergleich zum abgedeckten Fadensystem wesentlich höher schrumpft. Somit ist das durch die Expansion der Mikrohohlkörper hervorgerufene Schrumpfen bei dem erfindungsgemäßen Verstärkungsmaterial überwiegend auf eine Richtung beschränkt, d.h. es entsteht ein unidirektional voluminisiertes Verstärkungsmaterial. Ferner findet bei dem erfindungsgemäßen Verstärkungsmaterial kein Boldern oder Aufwerfen von Falten bzw. Einfrierungen von unerwünscht hohen Spannungen statt. Als Folge hiervon weist das erfindungsgemäß ausgebildete Verstärkungsmaterial nach dem durch die Wärmebehandlung hervorgerufenen Expandieren der Mikrohohlkörper sehr niedrige Koch- und Thermoschrumpfwerte auf. Ebenso treten bei dem erfindungsgemäß ausgebildeten Verstärkungsmaterial, wenn dieses in einem Verbundwerkstoff verarbeitet ist, kein nachträgliches Boldern und/oder Aufwerfen von Falten und keine unerwünschten Dimensionsänderungen auf.

Zu dem gleichen Ergebnis gelangt man, wenn man für die Herstellung der Warenbahn, beispielsweise durch Weben, Wirken, Vlieslegung oder Näh-Wirktechnik, in Längsrichtung Fadensysteme verwendet, die etwa 60 bis 100 % der ungeblähten Mikrohohlkörper enthalten, und in Querrichtung Fadensysteme einsetzt, die dementsprechend zwischen etwa 0 % und etwa 40 % der unaufgeblähten Mikrohohlkörper aufweisen. Dabei werden die Fadensysteme derart zueinander angeordnet, daß das eine Fadensystem das andere Fadensystem teilweise oder vollständig abdeckt. Die Warenbahn eines derartigen Verstärkungsmaterials würde bei einer thermischen Expansion der Mikrohohlkörper ohne Boldern oder Aufwerfen von Falten überwiegend in Längsrichtung schrumpfen. Wäre hingegen ein Schrumpfen in Querrichtung erwünscht, so bedarf es lediglich eines Austauschs der Fadensysteme gegeneinander, d.h. in einem derartigen Verstärkungsmaterial ist dann das Fadensystem mit dem höheren Anteil an ungeblähten Mikrokörperchen in Querrichtung und das Fadensystem mit dem geringeren Anteil an ungeblähten Mikrokörpern in Längsrichtung zu verarbeiten.

Bezüglich der Herstellung von derartigen Fadensystemen wird auf die EP-A-222 399 verwiesen, die auf denselben Anmelder zurückgeht.

Eine besonders geringe Bolder- bzw. Faltenneigung und hervorragende Restschrumpfwerte (Koch- sowie Thermoschrumpf bei 180°C) weist eine Ausführungsform des erfindungsgemäßen Verstärkungsmaterials auf, bei dem das abdeckende Fadensystem eine höhere Fadendichte pro cm aufweist als das abgedeckte Fadensystem. Bei einem derartigen Verstärkungsmaterial besitzen die beiden Fadensysteme relativ zueinander eine hohe Beweglichkeit, so daß die Volumenvergrößerung und die damit verbundene Verkürzung der Fadensysteme, die als Folge der Expansion der Mikrohohlkörper durch die thermische Behandlung auftritt, zu keiner unerwünschten Verwerfung und Faltenbildung der Warenbahn führt. Ferner erlaubt eine derartige Anordnung der Fadensysteme zueinander die Ausbildung einer hinreichend starken Warenbahn, so daß ein unter Verwendung eines solchen Verstärkungsmaterials hergestellter Faserverbundwerkstoff eine hohe Festigkeit und ein besonders gutes Elastizitätsverhalten bei einem gleichzeitig reduzierten spezifischen Gewicht besitzt.

Werden zudem noch etwa 70 bis 90 % der Mikrohohlkörper in dem abdeckenden Fadensystem angeordnet, so sind die Gefahren des Bolderns sowie des Aufwerfens von Lauf- bzw. Liegefalten der Warenbahn und die unerwünschte Verwerfung des fertigen Laminates restlos eliminiert.

Werden bei einer weiteren Ausführungsform des erfindungsgemäßen Verstärkungsmaterials die Mikrohohlkörper nur innerhalb des abdeckenden Fadensystems angeordnet, so ist das durch die Volumenvergrößerung hervorgerufene Schrumpfen der Warenbahn auch nur auf dieses Fadensystem begrenzt. Eine solche Ausführungsform des Verstärkungsmaterials wird bevorzugt für solche Warenbahnen verwendet, bei denen die beiden die Warenbahn bildenden Fadensysteme an ihren Berührungs punkten, beispielsweise durch Verkleben, fest miteinander verbunden sind. Bei der Schrumpfung des mit Mikrokügelchen versehenen abdeckenden Fadensystems erhöht sich hierbei lediglich die Fadendichte (pro Längeneinheit) des anderen Fadensystems, ohne daß es hierbei zur Ausbildung von Falten oder zum Boldern kommt.

Eine andere Ausführungsform des erfindungsgemäß ausgebildeten Verstärkungsmaterials sieht eine Warenbahn vor, bei der das abdeckende Fadensystem aus einem ungedrehten Multfilamentgarn besteht. Hierdurch ist bei dem zuvor beschriebenen Verfahren sichergestellt, daß der überwiegende Teil der ungeblähten Mikrohohlkörper in dieses Fadensystem eingelagert wird. Ferner können die bei der Volumenvergrößerung auftretenden Schrumpfkräfte durch die Elastizität der Elementarfäden des Multifilamentgarnes teilweise aufgefangen werden, so daß ein derartiges ungedrehtes Multifilamentgarn im Vergleich beispielsweise zu einem gedrehten Multifilamentgarn einen verringerten Gesamtschrumpf aufweist.

Besonders gute Eigenschaften bezüglich des Schrumpfverhaltens und damit auch bezüglich der Eliminierung der Gefahr von Falten- bzw. Bolderbildungen weist ein Verstärkungsmaterial auf, in dessen Warenbahn als abdeckendes Fadensystem ein ungedrehtes oder nur gering gedrehtes Multifilamentgarn enthalten ist, das zusätzlich noch texturiert wurde. Ein derartiges, texturiertes Muiltifilamentgarn weist im Vergleich zu einem nicht texturierten Muiltifilmanetgarn ein wesentlich höheres Volumen auf, was einerseits die Einlagerung der ungeblähten Mikrohohlkörper erleichtert und andererseits die Gesamtmenge an eingelagerten Mikrohohlkörpern erhöht. Darüberhinaus kann bei einem derartigen texturierten Multifilamentgarn die Texturierung den bei der Expansion der Mikrohohlkörper auftretenden Schrumpf auffangen, so daß hieraus ein wesentlich geringerer Gesamtschrumpf resultiert. Dies wiederum ermöglicht eine höhere Fadendichte der beiden Fadensysteme, insbesondere eine höhere Fadendichte des abdeckenden Fadensystems, so daß ein derartiges Verstärkungsmaterial besonders hohe Festigkeits- und Elastizitätseigenschaften besitzt.

Grundsätzlich kann das erfindungsgemäß ausgebildete Verstärkungsmaterial in der Warenbahn als abgedecktes Fadensystem jedes Multifilamentgarn bzw. Fasergarn aufweisen, das geeignet ist, dem Verstärkungsmaterial die notwendigen mechanischen Eigenschaften zu verleihen. Vorzugsweise sind in der Warenbahn für das abgedeckte Fadensystem Multifilamentgarne enthalten, da diese im Vergleich zu Fasergarnen in der Regel eine höhere Festigkeit besitzen. Demgegenüber haben jedoch Fasergarne in der Regel den Vorteil, daß sie im Vergleich zu Multifilamentgarnen aufgrund ihrer größeren bzw. strukturierteren Oberfläche eine bessere Haftung des Garnes zu der Harzkomponente bewirken, was sich in einer verbesserten Beständigkeit des fertigen Laminats gegenüber mechanischen Beanspruchungen ausdrückt.

Vorzugsweise weist eine in einem derartigen Verstärkungsmaterial vorgesehene Warenbahn als abgedecktes Fadensystem Multifilament- oder Fasergarne auf, die eine bestimmte Drehung besitzen, wobei diese Drehung zwischen etwa 300 und etwa 2000 Drehungen pro m beträgt. Hierdurch wird erreicht, daß einerseits die Aufnahme von Mikrohohlkörpern bei einem derartigen gedrehten Garn verringert wird und andererseits das gedrehte Fadensystem im Vergleich zu einem ungedrehten Fadensystem eine wesentlich geringere Fläche bei gleichzeitig verbesserter Festigkeit beansprucht, so daß die Beweglichkeit der Fadensysteme gegeneinander erhöht wird, was wiederum die Anfälligkeit der Warenbahn bezüglich des Bolderns und der Faltenaufwerfung verringert.

Aus dem gleichen Grund kann das abgedeckte Fadensystem eine in Wasser schwer lösliche bzw. unlösliche Avivage aufweisen, die zwar die Festigkeit des Fadensystems nicht erhöht, jedoch das Eindringen von Mikrohohlkörpern wirksam verhindert und zusätzlich noch ggf. die Reibung zwischen den beiden Fadensystemen verringert. Hierfür können die an sich dem Fachmann geläufigen Avivagen vorgesehen sein, die beispielsweise auf Basis von Acrylsäure-, Methacrylsäure-, Polyvinylalkohol- und/oder Siliconderivaten aufgebaut sind. Ferner kann eine derartige Avivage die Haftung des Harzes zur Warenbahn verbessern, da abhängig von der chemischen Zusammensetzung des Harzes und der Avivage chemische oder physikalische Bindungen hierzwischen ausgebildet sein können.

Eine andere Ausführungsform des erfindungsgemäßen Verstärkungsmaterials ist als Gewebe ausgebildet. Hierbei ist in Kettrichtung das abdeckende Fadensystem und in Schußrichtung das abgedeckte Fadensystem vorgesehen. Ein derartiges Gewebe schrumpft nach Einlagerung der Mikrohohlkörper und anschließender thermischer Behandlung im wesentlichen oder ausschließlich in Kettrichtung, so daß ein Boldern und/oder Faltenaufwerfen nicht auftreten kann.

Abhängig von der jeweiligen Bindung der beiden Fadensysteme in der Warenbahn lassen sich zusätzlich noch bei dem erfindungsgemäß ausgebildeten Verstärkungsmaterial bestimmte Effekte bewirken. Wird beispielsweise die Warenbahn als Gewebe in Leinwandbindung ausgebildet, und verarbeitet man das abdeckende Fadensystem in Kettrichtung und das abgedeckte Fadensystem in Schußrichtung, so entsteht durch Einlagerung des überwiegenden Teils, d.h. 60 bis 100 %, der Mikrohohlkörper in Kettrichtung und anschließendes Expandieren derselben ein Verstärkungsmaterial, das in Schußrichtung gesehen eine wellblechartige Struktur aufweist, wie dies noch nachfolgend in der Zeichnung näher erläutert ist. Ein derartig ausgebildetes Verstärkungsmaterial hat zusätzlich noch den Vorteil, daß bei der Herstellung mehrschichtiger Laminate, die durch Aufeinanderlegen mehrerer Lagen des Verstärkungsmaterials gebildet werden, durch die wellblechartige Struktur zwischen den Lagen Dränagekanäle entstehen, die einen guten Harzfluß sowie eine gute Entlüftung und damit eine gleichmäßige Harzverteilung und ggf. für den Fall von gewollten Lufteinschlüssen in den Kanälen auch ein geringeres spezifisches Gewicht ergeben.

Eine andere Ausführungsform des erfindungsgemäßen Verstärkungsmaterials weist eine als Gewebe ausgebildete Warenbahn auf, bei der die beiden Fadensysteme über eine flottierende Bindung miteinander verbunden sind. Hierbei bildet, wie bereits bei der vorstehenden Ausführungsform beschrieben, das abdeckende Fadensystem die Kette, während der Schuß aus dem abgedeckten Fadensystem besteht. Um bei einem derartigen Gewebe eine besonders glatte Lage der Warenbahn zu erreichen, empfiehlt es sich, in Bezug auf die rechte und linke Warenseite eine symmetrische Flottierung vorzusehen, d.h. der Schuß wird beispielsweise nur mit jedem zweiten, dritten oder vierten Kettfaden verkreuzt. Ein derartiges Verstärkungsmaterial besitzt wegen der relativ geringen Einbindung von Kett- und Schußfaden eine wesentlich höhere Elastizität als das vorstehend beschriebene in Leinwandbindung ausgebildete Verstärkungsmaterial.

Abhängig von dem jeweiligen Einsatzgebiet weist das abdeckende Fadensystem einen Titer zwischen etwa 34 Tex und etwa 1000 Tex, insbesondere zwischen 34 Tex und etwa 272 Tex auf, wobei die höheren Titer naturgemäß eine größere mechanische Belastbarkeit des Verstärkungsmaterials bewirken. Das abgedeckte Fadensystem besitzt üblicherweise einen Titer zwischen etwa 68 Tex und etwa 1200 Tex, insbesondere zwischen etwa 136 Tex und etwa 900 Tex. Die Elementarfadenzahl der beiden Fadensysteme kann gleich oder annähernd gleich sein, wobei bevorzugt solche Fadensysteme verwendet werden, bei denen das abdeckende Fadensystem eine wesentlich höhere Elementarfadenzahl aufweist als das abgedeckte Fadensystem. Üblicherweise beträgt für das zuerst genannte Fadensystem die Elementarfadenzahl zwischen etwa 24 und etwa 60, vorzugsweise zwischen etwa 30 und etwa 40, während bei dem zuletzt genannten Fadensystem die Elementarfadenzahl zwischen etwa 10 und etwa 40, vorzugsweise zwischen etwa 24 und etwa 36, liegt. Auch die Fadendichten pro cm sind zwischen den beiden Fadensystemen unterschiedlich. Vorzugsweise wird für das abdeckende Fadensystem eine Fadendichte zwischen etwa 8 und etwa 40 Fäden pro cm, insbesondere zwischen etwa 10 und etwa 30 Fäden pro cm, vorgesehen, während das abgedeckte Fadensystem eine Fadendichte zwischen etwa 1 Faden und etwa 10 Fäden pro cm, insbesondere zwischen etwa 4 Fäden und etwa 7 Fäden pro cm, aufweist.

Üblicherweise bestehen die Fadensysteme aus den bekannten synthetischen Fasermaterialien, wie beispielsweise Polyester-, Polyamid- und/oder Polypropylenfasern. Besonders geeignet sind jedoch Verstärkungsmaterialien, die als Fadensysteme Glasfasern, Kohlenstoffasern oder hochfeste synthetische Fasern, wie beispielsweise Aramidfasern, aufweisen.

Als Mikrohohlkörper sind in dem erfindungsgemäß ausgebildeten Verstärkungsmaterial die an sich bekannten und in der EP-A-222 399 beschriebenen organischen Füllkörper vorgesehen, wobei insbesondere Kügelchen aus aufgeblähten oder nicht aufgeblähten thermoplastischen Kunststoffen auf Basis von Vinylidenchlorid-Acrylnitril-Copolymeren in den Fadensystemen angeordnet sind.

Bei einer anderen Ausführungsform des erfindungsgemäßen Verstärkungsmaterials weisen die Fadensysteme nur teilweise und/oder nicht expandierte Mikrohohlkörper auf. Diese Ausführungsform ist insbesondere für die Großserienproduktion geeignet, da sich das nicht voluminisierte Verstärkungsmaterial wegen seiner geringeren Raumausdehnung wesentlich leichter transportieren läßt. Unmittelbar vor der Verarbeitung wird es dann durch eine thermische Behandlung voluminisiert, wobei das erfindungsgemäß offenbarte Konstruktion der beiden Fadensysteme sowie die Verteilung der Mikrohohlkörper auf die beiden Fadensysteme eine bolderarme und faltenfreie Lage des Verstärkungsmaterials sicherstellen.

Vorteilhafte Weiterbildungen des erfindungsgemäßen Verstärkungsmaterials sind in den Unteransprüchen angegeben.

Die Erfindung wird nachfolgend anhand von zwei Ausführungsformen in Verbindungen mit der Zeichnung näher erläutert. Es zeigen:
- Figur 1: eine schematische, perspektivische Schnittansicht einer ersten Ausführungsform eines Verstärkungsmaterials im ungeblähten Zustand;
- Figur 2: eine schematische Schnittansicht der in Fig.1 abgebildeten Ausführungsform im geblähten Zustand;
- Figur 3: eine schematische perspektivische Schnittansicht einer zweiten Ausführungsform des Verstärkungsmaterials im ungeblähten Zustand;
- Figur 4: eine schematische Schnittansicht der in Fig.3 abgebildeten Ausführungsform nach dem Aufblähen.

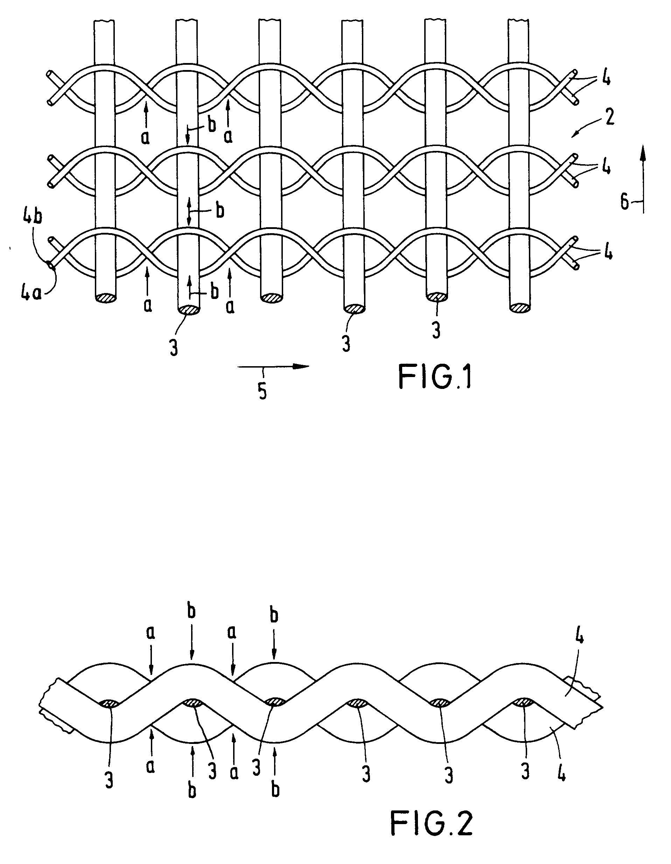

Wie den Figuren 1 und 2 zu entnehmen ist, weist eine erste Ausführungsform des Verstärkungsmaterials eine Warenbahn 2 auf, die bei der abgebildeten Ausführungsform als Gewebe ausgebildet ist. Das Gewebe 2 weist eine Leinwandbindung auf, wobei der Schuß 3 das abgedeckte Fadensystem und die Kette 4 das abdeckende Fadensystem bilden. Das Kettmaterial 4 ist ein Multifilamentgarn, wobei die Einzelkapillaren 4a bzw. 4b, die aus Glasfasern bestehen, an der vorderen Schnittfläche nur schematisch angedeutet sind. Die Kettdichte bei der Ausführungsform des Verstärkungsmaterials gemäß Beispiel 1 beträgt 13 Fäden pro cm, während das Kettmaterial einen Titer von 92 Tex besitzt.

Das Schußmaterial, bei dem es sich ebenfalls um ein Multifilamentgarn aus Glasfasern handelt, besitzt einen Titer von 160 Tex und eine Fadendichte von 2 Fäden pro cm.

Nach Einbringen von ungeblähten Microspheres aus einem Vinylidenchlorid-Acrylnitril-Copolymer in das Gewebe 2 sind innerhalb der Kette 4 etwa 90 Vol.% der Mikrohohlkörper angeordnet. Der Schuß 3 weist dementsprechend etwa 10 Vol.% (3 g/m²) der Mikrohohlkörper auf.

Wird das in Figur 1 gezeigte mit ungeblähten Mikrohohlkörpern beladene Verstärkungsmaterial nunmehr thermisch behandelt, beispielsweise bei einer Temperatur zwischen etwa 140°C und etwa 160°C, so blähen sich die zwischen den Elementarfäden innerhalb der Fadensysteme angeordenten Mikrohohlkörper auf, was zu einer enormen Volumenvergrößerung führt. Gleichzeitig schrumpfen die Kettfäden 4 in Pfeilrichtung 5 um etwa 5 cm pro m, während die Schußfäden 3 ihre Länge in Pfeilrichtung 6 nicht verringern. Hierdurch entsteht ein sehr voluminöses Gewebe, wie dies der Schnittansicht gemäß Figur 2 zu entnehmen ist.

Die Figur 2 zeigt das in Figur 1 abgebildete Verstärkungsmaterial im aufgeblähten Zustand. Hierbei sind zwei Kettfäden 4 sowie sechs Schußfäden 3 abgebildet. Die Kettfäden 4 bilden bei der in den Figuren 1 und 2 dargestellten Ausführungsform das abdeckende Fadensystem, während das abgedeckte Fadensystem aus den Schußfäden 3 besteht. Die Kettfäden 4 (Figur 2) sind aufgrund der eingelagerten, aufgeblähten Mikrohohlkörper in ihrem Volumen im Vergleich zu den Schußfäden 3 erheblich vergrößert. Durch die bestimmte Bindung der Kett- und Schußfäden miteinander und durch die unterschiedliche Aufblähung von Kett- und Schußfäden ergibt sich bei der in den Figuren 1 und 2-gezeigten Ausführungsform eine Materialvertiefung im Bereich der Kreuzungspunkte der Kettfäden, der in den Figuren 1 und 2 mit a bezeichnet ist. Benachbart hierzu ist ein Bereich b erkennbar, in dem das Material erhöht ist. Hieran schließt sich erneut ein Bereich einer Materialvertiefung a und daran wieder eine Materialerhöhung b an. Bedingt durch die vorstehend beschriebene Konstruktion der Warenbahn 2 und der Anordnung der Mikrohohlkörper überwiegend im Kettmaterial kann während der Expansion das Kettmaterial weitgehend frei schrumpfen, so daß unerwünschte eingefrorene Spannungen sowie ein Boldern oder Aufwerfen von Falten nicht auftreten. Somit weist die in Figur 2 gezeigte Ausführungsform im Schnitt gesehen eine wellblechartige Struktur auf, die sich in der Draufsicht als unidirektional voluminisiertes Gewebe darstellt.

Wird nunmehr beim Laminieren ein derartiges Verstärkungsmaterial mehrlagig übereinander angeordnet, so bilden sich zwischen den einzelnen Lagen der Verstärkungsmaterialien dränageartige Hohlräume an den Stellen a, die einerseits eine gute Entlüftung des Verstärkungsmaterials während der Tränkung mit dem Harz sicherstellen und andererseits, falls erwünscht, zusätzliche Hohlräume zwischen den einzelnen Lagen bereitstellen, wodurch zusätzlich das spezifische Gewicht eines derartigen Faserverbundwerkstoffes reduziert wird. Darüber hinaus bewirkt eine derartige Luftschicht eine Erhöhung der Druckelastizität und gleichzeitig eine Verbesserung der Wärmedämmung.

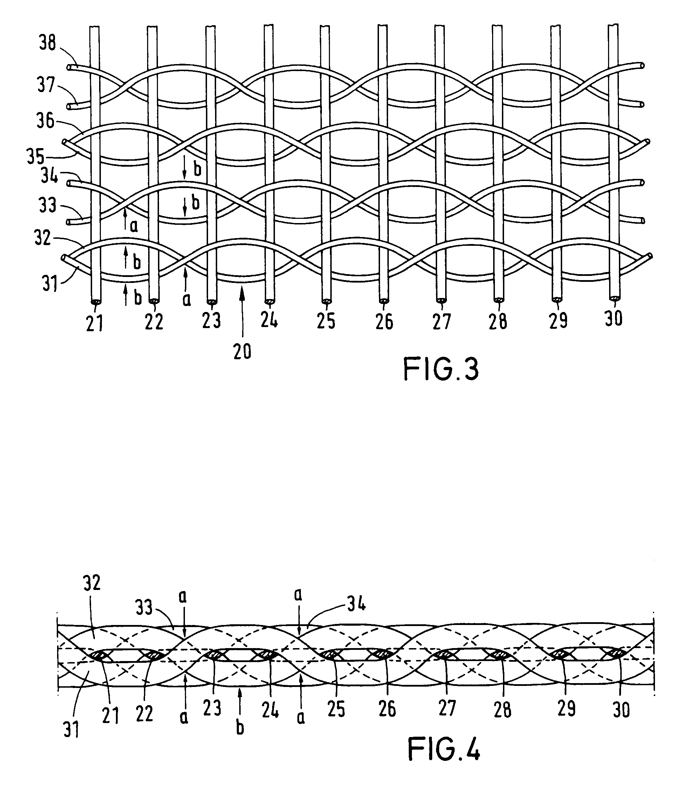

Bei der in den Figuren 3 und 4 gezeigten Ausführungsform des Verstärkungsmaterials ist die Warenbahn 20 ebenfalls als Glasfasergewebe ausgebildet. Hierbei weist das Gewebe Schußfäden 21 bis 30 sowie Kettfäden 31 bis 38 auf, die über eine flottierende Bindung miteinander verwebt sind. Hierbei ist die Bindung des Gewebes derart ausgebildet, daß die Kettfäden 31 bis 38, die das abdeckende Fadensystem bilden, jeweils abwechselnd von der oberen und unteren Warenseite die Schußfäden 21-30 abbinden. So bindet beispielsweise der Kettfaden 38 zunächst das Schußfadenpaar 22 und 23 von der unteren Gewebeseite, anschließend das Schußfadenpaar 24 und 25 von der oberen Gewebeseite, hiernach das Schußfadenpaar 26 und 27 wiederum von der unteren Gewebeseite und danach das Schußfadenpaar 28 und 29 von der oberen Gewebeseite ab. Der sich hieran anschließende nächste Kettfaden 37 bindet zunächst das Schußfadenpaar 22 und 23 von der oberen Gewebeseite, anschließend das Schußfadenpaar 24 und 25 von der unteren Gewebeseite, danach das Schußfadenpaar 26 und 27 wiederum von der oberen Gewebeseite und hiernach das Schußfadenpaar 28 und 29 von der unteren Gewebeseite ab, wie dies deutlich aus dem in Figur 3 gezeigten Gewebeausschnitt erkennbar ist. Der Kettfaden 33 bindet bei dem in Figur 3 gezeigten Ausschnitt des Gewebes den Schußfaden 21 von unten, dann das Schußfadenpaar 22, 23 von oben, danach die Schußfäden 24, 25 von unten, danach die Schußfäden 26, 27 von oben, danach die Schußfäden 28, 29 von unten und abschließend den Schußfaden 30 von oben ab, während der Kettfaden 34 zunächst den Schußfaden 21 von oben, danach die Schußfäden 22 und 23 von unten, hiernach die Schußfäden 24 und 25 von oben, anschließend die Schußfäden 26 und 27 von unten, danach die Schußfäden 28 und 29 von oben und abschliessend den Schußfaden 30 von unten abbindet. Mit dem Kettfaden 35 wiederholt sich die zuvor beschriebene Abbindung der Schußfäden, so daß der Kettfaden 35 dem Kettfaden 31, der Kettfaden 36 dem Kettfaden 32, der Kettfaden 37 dem Kettfaden 33 und der Kettfaden 38 dem Kettfaden 34 entspricht. Allgemein kann man die zuvor beschriebene Bindung zwischen Kett- und Schußfäden dadurch beschreiben, daß die Kettfäden 31 bis 38 jeweils zwei Schußfäden 21 bis 30 überspringen, wobei die jeweiligen Kreuzungspunkte a eines Kettfadenpaares (beispielsweise 31 und 32 oder 33 und 34) zu den Kreuzungspunkten a des danebenliegenden Kettfadenpaares (beispielsweise Kettfadenpaar 31 und 32 zu Kettfadenpaar 33 und 34) um einen Schuß versetzt sind. Durch diese Konstruktion wird erreicht, daß die durch die Verkreuzung der Kettfäden hervorgerufenen Einschnürungen in den Bereichen a durch die auf der Ober- und Unterseite parallel laufenden Kettfäden überbrückt werden.

Dies wiederum führt dazu, daß das Verstärkungsmaterial im aufgeblähten Zustand eine nahezu ebene, brettartige Oberfläche aufweist, wie dies in der Figur 4 dargestellt ist. In dieser Figur ist deutlich zu erkennen, daß die Bereiche a, in denen sich die Kettfäden überkreuzen und in denen nach dem Aufblähen gemäß der vorstehenden Beschreibung zu den Figuren 1 und 2 Materialvertiefungen entstehen, durch Bereiche b von danebenliegenden Kettfadenpaaren, in denen sich die Kettfäden nicht überkreuzen und in denen gemäß der vorstehenden Beschreibung zu den Figuren 1 und 2 Materialerhöhungen entstehen, überbrückt werden. Ebenso wie vorstehend zu Figur 2 beschrieben, sind die Schußfäden 21 bis 30 bei der in Figur 4 gezeigten Ausführungsform nicht bzw. nur minimal aufgebläht, während die Kettfäden 31 bis 38 stark in ihrem Volumen vergrößert sind.

In diesem Ausführungsbeispiel besteht das Kettmaterial aus einem Multifilamentgarn mit einem Titer von 68 Tex bei einer Fadendichte von 25 Fäden pro Zentimeter. Das Schußmaterial weist einen Titer von 300 Tex bei einer Fadendichte von 3 pro Zentimeter auf. Innerhalb des Kettmaterials sind 90 Volumenprozent (36 g/m²) der Mikrohohlkörper und innerhalb des Schußmaterials 10 Volumenprozent (4 g/m²) der Mikrohohlkörper angeordnet.

## Patentansprüche

1. Verstärkungsmaterial für Duroplaste aus einer Warenbahn, die als Gewebe, Vlies, Gelege oder Maschenware ausgebildet ist und mindestens zwei, miteinander verkreuzte und/oder verbundene Fadensysteme aufweist, wobei das eine Fadensystem überwiegend quer und das andere überwiegend längs zur Warenbahn verlaufen, und innerhalb der Fadensysteme Mikrohohlkörper aus Kunststoff mit einem Durchmesser von 20 µm bis 300 µm angeordnet sind, dadurch gekennzeichnet, daß ein Fadensystem das andere teilweise oder vollständig abdeckt und daß in dem abdeckenden Fadensystem etwa 60 bis 100 Volumenprozent der Mikrohohlkörper angeordnet sind.

2. Verstärkungsmaterial nach Anspruch 1, dadurch gekennzeichnet, daß das abdeckende Fadensystem (4;31-38) eine höhere Fadendichte pro Zentimeter aufweist als das abgedeckte Fadensystem (3;21-30).

3. Verstärkungsmaterial nach Anspruch 1 oder 2, dadurch gekennzeichnet, daß das abdeckende Fadensystem (4;31-38) etwa 70 bis 90 Vol.% der Mikrohohlkörper enthält.

4. Verstärkungsmaterial nach einem der vorangehenden Ansprüche, dadurch gekennzeichnet, daß das abdeckende Fadensystem (4;31-38) aus einem ungedrehten Multifilamentgarn, insbesondere aus Glasfaser, Kohlenstoffaser- und/oder einem aromatischen Polyamidgarn besteht.

5. Verstärkungsmaterial nach einem der vorangehenden Ansprüche, dadurch gekennzeichnet, daß das abdeckende Fadensystem (4;31-38) aus einem Multifilamentgarn besteht.

6. Verstärkungsmaterial nach einem der vorangehenden Ansprüche, dadurch gekennzeichnet, daß das abgedeckte Fadensystem (3;21-30) eine Drehung zwischen etwa 300 und etwa 2000 Drehungen/m aufweist.

7. Verstärkungsmaterial nach einem der vorangehenden Ansprüche, dadurch gekennzeichnet, daß das abgedeckte Fadensystem (3;21-30) eine in Wasser schwer lösliche bzw. unlösliche Avivage aufweist.

8. Verstärkungsmaterial nach einem der vorangehenden Ansprüche, dadurch gekennzeichnet, daß die Warenbahn ein Gewebe (2) ist, das in Kettrichtung das abdeckende Fadensystem (4;31-38) und in Schußrichtung das abgedeckte Fadensystem (3;21-30) aufweist.

9. Verstärkungsmaterial nach Anspruch 8, dadurch gekennzeichnet, daß das Gewebe eine Leinwandbindung besitzt.

10. Verstärkungsmaterial nach Anspruch 8, dadurch gekennzeichnet, daß das Gewebe eine flottierende Bindung aufweist, wobei ein Schuß (21-30) jeweils von zwei Kettfäden (31-38) abwechselnd von der oberen und unteren Gewebeseite abgebunden wird.

11. Verstärkungsmaterial nach Anspruch 10, dadurch gekennzeichnet, daß die Kettfäden (31-38) jeweils zwei Schußfäden (21,22;23,24;25,26;27,28;29,30) derart überspringen, daß die jeweiligen Kreuzungspunkte (a) eines Kettfadenpaares (31,32;33,34;35,36;37,38) zu den Kreuzungspunkten (a) des daneben angeordneten Kettfadenpaares (31,32;33,34;35,36;37,38) um einen Schußfaden (21-30) versetzt sind.

12. Verstärkungsmaterial nach einem der vorangehenden Ansprüche, dadurch gekennzeichnet, daß das abdeckende Fadensystem (4;31-38) einen Titer zwischen 34 Tex und 1000 Tex, insbesondere zwischen 34 Tex und 272 Tex, und das abgedeckte Fadensystem (3;21-30) einen Titer zwischen 68 Tex und 1200 Tex, insbesondere zwischen 136 Tex und 900 Tex, besitzen.

13. Verstärkungsmaterial nach einem der vorangehenden Ansprüche, dadurch gekennzeichnet, daß das abdeckende Fadensystem (4;31-38) eine Fadendichte zwischen 8 und 40 Fäden/cm, insbesondere zwischen 10 und 30 Fäden/cm, und das abgedeckte Fadensystem (3;21-30) eine Fadendichte zwischen 1 und 10 Fäden/cm, insbesondere zwischen 4 und 7 Fäden/cm, aufweisen.

14. Verstärkungsmaterial nach einem der vorangehenden Ansprüche, dadurch gekennzeichnet, daß die Fadensysteme (3,4;21-38) nur teilweise und/oder nicht expandierte Mikrohohlkörper aufweisen.

15. Verwendung des Verstärkungsmaterials nach einem der Ansprüche 1 bis 14 zur Herstellung von Leichtlaminaten aus Duroplasten.

16. Duroplast-Faser-Verbundwerkstoff mit einem geringen spezifischen Gewicht und einer in dem Verbundwerkstoff eingearbeiteten Warenbahn, die als Gewebe, Vlies, Gelege oder Maschenware ausgebildet ist und mindestens zwei, miteinander verkreuzte und/ oder verbundene Fadensysteme aufweist, wobei das eine Fadensystem überwiegend quer zur Warenbahn und das andere Fadensystem überwiegend längs zur Warenbahn verlaufen und innerhalb der Fadensysteme Mikrohohlkörper aus Kunststoff mit einem Durchmesser von 20 µm bis 300 µm angeordnet sind, dadurch gekennzeichnet, daß in der Warenbahn das eine Fadensystem das andere Fadensystem teilweise oder vollständig abdeckt und daß in dem abdeckenden Fadensystem etwa 60 Vol.% bis etwa 100 Vol.% der Mikrohohlkörper angeordnet sind.

## Claims

1. In a reinforcing material for duroplastics comprising a web in the form of a woven, non-woven, fiber-woven, or mesh having at least two intersecting and/or interwoven thread systems, one of which extends mainly across and the other mainly along the web, and plastic microspheres with a diameter of 20 to 300 µm positioned inside the thread systems, the improvement wherein one thread system at least partly covers the other, the covering thread system containing approximately 60 to 100 % by volume of the microspheres.

2. A reinforcing material according to claim 1, wherein the covering thread system (4; 31-38) has a higher thread density per cm than the covered thread system (3; 21-30).

3. A reinforcing material according to claim 1 or 2, wherein the covering thread system (4; 31-38) contains approximately 70 to 90 % by volume of the microspheres.

4. A reinforcing material according to one of the preceeding claims, wherein the covering thread system (4; 31-38) is a zero-twist multifilament yarn, especially of a glass fiber, a carbon-fiber and/or an aromatic-polyamide.

5. A reinforcing material according to one of the preceeding claims, wherein the covering thread system (4; 31-38) is a multifilament yarn.

6. A reinforcing material according to one of the preceeding claims, wherein the covered thread system (3; 21-30) has a twist of between approximately 300 and approximately 2000 turns per meter.

7. A reinforcing material according to one of the preceeding claims, wherein the covered thread system (3; 21-30) has a finish that is essentially water insoluble.

8. A reinforcing material according to one of the preceeding claims, wherein the web is a woven (2) with the covering thread system (4; 31-38) extending in the warp direction and the covered thread system (3; 21-30) extending in the weft direction.

9. A reinforcing material according to claim 8, wherein the woven has a linen weave.

10. A reinforcing material according to claim 8, wherein the woven has a floating weave, with one weft (21-30) interlaced by two warp threads (31-38) from the top and bottom of the web alternately.

11. A reinforcing material according to claim 10, wherein each warp thread (31-38) skips tow weft threads (21 & 22, 23 & 24, 25 & 26, 27 & 28, and 29 & 30) so that the particular points (a) of intersection of one pair of warp threads (31 & 32, 33 & 34, 35 & 36, or 37 & 38) are displaced one weft thread (21-30) from the points (a) of intersection of the adjacent pair (31 & 32, 33 & 34, 35 & 36, and 37 & 38) of warp threads.

12. A reinforcing material according to one of the preceeding claims, wherein the covering thread system (4; 31-38) has a titer of between 34 tex and 1000 tex, especially between 34 tex and 272 tex, and the covered thread system (3; 21-30) has a titer of between 68 tex and 1200 tex, especially between 136 tex and 900 tex.

13. A reinforcing material according to one of the preceeding claims, wherein the covering thread system (4; 31-38) has a thread density of between 8 and 40 threads per cm, especially between 10 and 30 threads per cm, and the covered thread system (3; 21-30) has a thread density of between 1 and 10 threads per cm, especially between 4 and 7 threads per cm.

14. A reinforcing material according to one of the preceeding claims, wherein at least one of the thread systems (3 & 4 or 21-38) have microspheres which are at most partly expanded.

15. A lightweight laminate including a duroplastic based on a reinforcing material according to claim 1 to 14.

16. In a duroplastic fiber composite of low specific weight and comprising a web in the form of a woven, non-woven, fiber-woven, or mesh with at least two intersecting and/or interlaced thread systems worked into it, one thread system extending mainly across and the other mainly along the web, and plastic microspheres with a diameter of 20 to 300 µm positioned inside the thread systems, the improvement wherein one thread system partly or completely covers the other in the web, the covering thread system containing approximately 60 to 100 % by volume of the microspheres.

## Revendications

1. Matériau de renforcement pour duroplastes constitué d'une bande textile qui est réalisée comme tissu, voile, nappe ou tricot et qui présente au moins deux systèmes de fils entrecroisés et/ou liés l'un à l'autre, qui s'étendent, principalement, l'un transversalement et l'autre longitudinalement à la bande textile, et des corps en matière synthétique présentant des cavités microscopiques, ayant un diamètre de 20 µm à 300 µm, sont disposés à l'intérieur des systèmes de fils, caractérisé en ce que l'un des systèmes de fils recouvre partiellement ou totalement l'autre et en ce qu'environ 60 à 100 % en volume des corps à cavités microscopiques sont disposés dans le système de fils couvrant.

2. Matériau de renforcement suivant la revendication 1, caractérisé en ce que le système de fils couvrant (4 ; 31-38) présente une plus grande densité de fils au centimètre que le système de fils couvert (3 ; 21-30).

3. Matériau de renforcement suivant la revendication 1 ou 2, caractérisé en ce que le système de fils couvrant (4 ; 31-38) contient environ 70 à 90 % en volume des corps à cavités microscopiques.

4. Matériau de renforcement suivant l'une des revendications précédentes, caractérisé en ce que le système de fils couvrant (4 ; 31-38) est constitué d'un filé multifilament sans torsion, notamment d'un filé de fibres de verre, d'un filé de fibres de carbone et/ou d'un filé de polyamide aromatique.

5. Matériau de renforcement suivant l'une des revendications précédentes, caractérisé en ce que le système de fils couvrant (4 ; 31-38) est constitué d'un filé multifilament.

6. Matériau de renforcement suivant l'une des revendications précédentes, caractérisé en ce que le système de fils couvert (3 ; 21-30) présente une torsion d'environ 300 à environ 2000 tours au mètre.

7. Matériau de renforcement suivant l'une des revendications précédentes, caractérisé en ce que le système de fils couvert (3 ; 21-30) présente un avivage difficilement soluble dans l'eau ou insoluble dans l'eau.

8. Matériau de renforcement suivant l'une des revendications précédentes, caractérisé en ce que la bande textile est un tissu (2) qui présente dans la direction de la chaîne le système de fils couvrant (4 ; 31-38) et dans la direction de la trame, le système de fils couvert (3 ; 21-30).

9. Matériau de renforcement suivant la revendication 8, caractérisé en ce que le tissu possède une armure toile.

10. Matériau de renforcement suivant la revendication 8, caractérisé en ce que le tissu présente une armure flottante selon laquelle une duite (21-30) est liée à chaque fois par deux fils de chaîne (31-38) alternativement depuis le côté supérieur et le côté inférieur du tissu.

11. Matériau de renforcement suivant la revendication 10, caractérisé en ce que les fils de chaîne (31-38) sont sautés à chaque fois par deux fils de trame (21, 22 ; 23, 24 ; 25, 26 ; 27, 28 ; 29, 30) de façon telle que les points de croisement (a) de chaque paire (31, 32 ; 33, 34 ; 35, 36 ; 37, 38) de fils de chaîne sont décalés d'un fil de trame (21-30) par rapport aux points de croisement (a) de la paire adjacente (31, 32 ; 33, 34 ; 35, 36 ; 37, 38) de fils de chaîne.

12. Matériau de renforcement suivant l'une des revendications précédentes, caractérisé en ce que le système de fils couvrant (4, 31-38) possède un titre compris entre 34 et 1000 tex, notamment entre 34 tex et 272 tex et le système de fils couvert (3 ; 21-30) possède un titre compris entre 68 tex et 1200 tex, notamment entre 136 tex et 900 tex.

13. Matériau de renforcement suivant l'une des revendications précédentes, caractérisé en ce que le système de fils couvrant (4 ; 31-38) présente une densité de fils entre 8 et 40 fils/cm, notamment entre 10 et 30 fils/cm et le système de fils couvert (3 ; 21-30) présente une densité de fils comprise entre 1 et 10 fils/cm, notamment entre 4 et 7 fils/cm.

14. Matériau de renforcement suivant l'une des revendications précédentes, caractérisé en ce que les systèmes de fils (3, 4 ; 21-38) présentent des corps à cavités microscopiques qui ne sont que partiellement expansés et/ou des corps à cavités microscopiques qui ne sont nullement expansés.

15. Utilisation du matériau de renforcement suivant l'une des revendications 1 à 14 pour la production de stratifiés légers en duroplastes.

16. Matériau composite duroplaste-fibre de faible poids spécifique et comprenant une bande textile incorporée, qui est réalisée comme tissu, voile, nappe ou tricot et qui présente au moins deux systèmes de fils entrecroisés et/ou liés ensemble, dont l'un s'étend, principalement, transversalement à la bande textile et l'autre s'étend, principalement, longitudinalement à la bande textile et des corps à cavités microscopiques en matière synthétique ayant un diamètre de 20 µm à 300 µm sont disposés à l'intérieur des systèmes de fils, caractérisé en ce que l'un des systèmes de fils recouvre partiellement ou totalement l'autre dans la bande textile et en ce qu'environ 60 % en volume à environ 100 % en volume des corps à cavités microscopiques sont disposés dans le système de fils couvrant.
